# EUROPÄISCHE PATENTANMELDUNG

(11) **EP 4 662 991 A1**
(43) Veröffentlichungstag der Anmeldung: **17.12.2025**
(21) Anmeldenummer: 25182202.9
(22) Anmeldetag: 12.06.2025
(51) Int. Cl.: A01B 23/02, A01B 51/04

(54) **WERKZEUGTRÄGER**

(30) Priorität: 13.06.2024 DE 102024116697
(71) Anmelder: Lemken GmbH & Co KG, 46519 Alpen (DE)
(72) Erfinder: Braber, Matthijs, 3244 AJ Nieuwe-Tonge (NL)

(57) **Zusammenfassung**

Es wird ein modularer Werkzeugträger (1) zur Kombination oder Anordnung mehrerer landwirtschaftlicher Werkzeuge (2) vorgeschlagen,
wobei der Werkzeugträger (1) zumindest ein erstes und ein zweites Trägerprofil (4, 5) zur Anordnung eines oder mehrerer Werkzeuge (2) oder dafür geeignete Werkzeughalter (3) aufweisen, welche mit zueinander passenden Ausnehmungen 4 und Vorsprüngen eine eindeutige und festsitzende Montage und Austauschbarkeit ermöglichen.

## Beschreibung

### Werkzeugträger

Die Erfindung betrifft einen Werkzeugträger für ein landwirtschaftliches Arbeitsgerät gemäß dem Oberbegriff des Patentanspruches 1.

Die Offenlegung DE102022108719A1 zeigt ein Bodenbearbeitungsgerät zur reihenweisen Bearbeitung von Pflanzenzwischenräumen mit verschiedenartigen, an einem Werkzeugträger angebauten Werkzeugen. Die Patentschrift DE 969 422 B zeigt einen modularen Werkzeugträger zur wechselweisen Aufnahme verschiedenartiger Werkzeuge zur Bearbeitung einer Reihenkultur.

Beiden Lösungen als Stand der Technik ist gemein, dass lediglich die gesamten Werkzeugträger durch Lösen vom Rahmen oder einzelne Werkzeuge am Werkzeugträger ausgetauscht werden können. Diese müssten bei einem Wechsel stets neu zum Werkzeugträger positioniert werden. Eine modulare Anordnung auch verschiedener Werkzeuge sowie ein Austausch vorkonfigurierter, einzelner Werkzeuggruppen ist nicht möglich.

Aufgabe der Erfindung ist es, einen Werkzeugträger bereit zu stellen, welcher obige Nachteile überwindet und eine modulare Anordnung und/oder Austausch von Werkzeugen oder Werkzeuggruppen ermöglicht.

Diese Aufgabe wird durch die Merkmale des kennzeichnenden Teiles des Anspruches 1 gelöst.

Ein Werkzeugträger zur Kombination oder Anordnung mehrerer landwirtschaftlicher Werkzeuge, insbesondere Ausbring- oder Bodenbearbeitungswerkzeuge, weist zumindest ein erstes und ein zweites Trägerprofil zur Anordnung eines oder mehrerer Werkzeuge oder dafür geeignete Werkzeughalter auf, welche benachbart und entlang einer Profilachse des Werkzeugträgers und / oder der Trägerprofile fluchtend zueinander und lösbar angeordnet sind. Dabei sind der Werkzeugträger beziehungsweise die Trägerprofile von einer ersten und zweiten, zueinander senkrecht angeordneten Längsebene auf Höhe der Profilachse durchschnitten. Dabei weisen das erste und zweite Trägerprofil an ihren benachbarten Enden jeweils zueinander passende Ausnehmungen und/oder Vorsprünge auf,
welche einen bevorzugt senkrecht zu einer ersten Längsebene projizierten Formquerschnitt aufweisen. Weiterhin sind das erste und zweite Trägerprofil mit zumindest einem Blockiermittel zueinander form- und/oder kraftschlüssig blockiert. Dabei ist das Blockiermittel senkrecht oder in einem Winkel zur zweiten Längsebene und innerhalb der oder parallel zur ersten Längsebene angeordnet. Durch diese Anordnung können die jeweiligen Trägerprofile ineinander verhakt oder verzahnt werden und bilden zumindest in Richtung der Profilachse des Werkzeugträgers und / oder der Trägerprofile eine formschlüssige Verbindung, welche eine Bewegung in zumindest einem Freiheitsgrad verhindert und die Trägerprofile zueinander arretiert. Eine Arretierung in den weiteren Freiheitsgraden wird durch das lösbare Blockiermittel erreicht.

Bevorzugt ist das Blockiermittel als Bolzen- oder Steckverbindung und mit einer axial zum Bolzen oder Stecker wirkenden, lösbaren Sicherung versehen.

In einer verbesserten Ausführungsform der Erfindung ist das Blockiermittel als Klemmmittel, insbesondere mit einer Klemmkraft wirkend senkrecht oder in einem Winkel zur zweiten Längsebene ausgebildet. Durch das Aufbringen einer Klemmkraft durch das Klemmmittel, welche in Richtung der zweiten Profilebene wirkt, wird bei einer passenden Formgebung der Ausnehmungen und/oder Vorsprünge an den Trägerprofilen ein Spiel vermieden oder verringert. Das Spiel, welches eine geringe Relativbewegung zwischen den ersten und zweiten Trägerprofilen darstellt, entsteht beispielsweise durch Fertigungstoleranzen und wird durch Aufbringen einer Klemmkraft somit behoben.

In einer besonderen Form des Werkzeugträgers weisen die Ausnehmungen und/oder Vorsprünge des ersten und zweiten Trägerprofils formschlussförmige, insbesondere V-förmige, keilförmige, bogenförmige hakenförmige und/oder verzahnungsförmige Formquerschnitte auf. Diese zueinander passenden und ineinander greifenden Formquerschnitte der Trägerprofile vermeiden insbesondere durch ihre Zentrierwirkung fertigungstoleranzbedingtes Spiel. Weiterhin wird eine vereinfachte Montage und fehlerfreie Zuordnung der Trägerprofile zueinander erreicht.

In einer weiter verbesserten Form des Werkzeugträgers sind das erste und zweite Trägerprofil an ihren benachbarten Enden mit jeweils zusätzlichen, zueinander passenden Ausnehmungen und/oder Vorsprüngen ausgebildet, welche einen senkrecht zu der zweiten Längsebene oder abweichend von der ersten Längsebene projizierten Formquerschnitt aufweisen. Durch diese zusätzlichen Ausnehmungen, welche ebenfalls eine Formschlussverbindung bilden, wird eine ungewollte Verschiebung oder Verdrehung in zumindest einem weiteren Freiheitsgrad, insbesondere seitlich oder senkrecht zur ersten Längsebene oder radial zur Längsachse erreicht. Auch wird durch die zusätzlichen Ausnehmungen eine eindeutige und definierte Positionierung der Trägerprofile zueinander erreicht.

In einer vereinfachten Form des Werkzeugträgers sind das erste und zweite Trägerprofil als teiloffenes oder geschlossenes Hohlprofil, insbesondere als Rund- oder Kantrohr-, Halbrund- oder U-Profil ausgebildet. Da die Hauptspannungen der Trägerprofile, welche durch einwirkende Werkzeugkräfte entstehen, an den Außenkonturen der Trägerprofile entstehen, können die Trägerprofile mit einer passenden Wandstärke entsprechend leicht und somit gewichts- und kostenoptimiert hergestellt werden. Insbesondere bieten sich Strahlschneidverfahren wie Laser-, Plasma- oder Flüssigkeitsstrahlschneiden, ebenso aber Erodier- oder Zerspanungsverfahren zur Herstellung der Formquerschnitte für die Ausnehmungen oder Vorsprünge an. Weiter bevorzugt können mehrere Formgebungsschritte in einer einzigen Aufspannung eines Werkstückes kombiniert werden. Insbesondere ist ein Rohrlaser für den Zuschnitt und die Erzeugung der Formquerschnitte der einzelnen Trägerprofile aus einem länglichen Hohlprofil geeignet.

In einer weiteren Erfindungsform ist dem Werkzeugträger das erste Trägerprofil fest und das zweite Trägerprofil dem ersten Trägerprofil lösbar zugeordnet. Dies erübrigt eine zusätzliche Aufnahme zur Anbringung des ersten Trägerprofils an den Werkzeugträger, da dieser stets mindestens ein Trägerprofil aufweist. Das zweite und weitere Trägerprofil weisen dazu beidseitig ihrer Enden erfindungsgemäße Ausnehmungen und Vorsprünge zur Verbindung mit den benachbarten Trägerprofilen auf. Ein letztes Trägerprofil kann wiederum wie das erste Trägerprofil nur an einem Ende Ausnehmungen und Vorsprünge zur Verbindung mit den benachbarten Trägerprofilen aufweisen. Bevorzugt kann ein erstes und letztes Trägerprofil durch Auftrennen eines zweiten Trägerprofiles hergestellt werden. Weiterhin können das erste und ein optionales letztes Trägerprofil eine von dem zweiten und weiterer Trägerprofile verschiedene, bevorzugt kürzere Längen aufweisen. Theoretisch können eine beliebige Anzahl von Trägerprofilen zueinander angeordnet werden. Bevorzugt und in der Praxis bewährt ist jedoch eine einstellige Anzahl von Trägerprofilen, weiter bevorzugt, insbesondere bei höherer mechanischer Beanspruchung, maximal fünf Trägerprofile, welche insgesamt hintereinander an einem Werkzeugträger angeordnet sind. Das erste, fest mit dem Werkzeugträger fest verbundene Trägerprofil wird dabei nicht mitgezählt, da es nicht zwingend Werkzeuge aufnimmt.

In einer besonderen Erfindungsform ist dem Werkzeugträger oder zumindest einem Trägerprofil ein Tiefenführungsmittel zugeordnet. Das Tiefenführungsmittel ist bevorzugt als Gleitkufe oder als Stützrad oder Rolle ausgebildet und bildet einen Kontakt mit der Bodenoberfläche. Hierdurch kann der Abstand oder die Eindringtiefe der Werkzeuge, welche ebenfalls mit dem Werkzeugträger in Verbindung stehen, exakt eingehalten werden. Bevorzugt ist der Höhenabstand oder eine weitere Positionierung des Tiefenführungsmittels relativ zum Werkzeugträger einstellbar ausgebildet. Dies kann mittels eines Teleskopes oder eines schwenkbaren Hebels oder Armes in diskret in Stufen oder stufenlos erfolgen. Weiterbevorzugt erfolgt die Positionierung des Tiefenführungsmittels motorisch und kann dadurch fernbetätigt oder mittels einer Steuerung oder einer Regelung automatisiert erfolgen.

In einer weiteren Ausführung des Werkzeugträger weist zumindest ein Trägerprofil Ausnehmungen und/oder Vorsprünge zur Aufnahme von zumindest einem Werkzeug oder eines Werkzeughalters auf. Für Werkzeuge und oder Werkzeughalter, welche das Längsprofil eines Trägerprofiles durchdringen, ist dies, wie oben beschrieben, eine kostengünstige Herstellmöglichkeit der Trägerprofile und spart weitere Halte- oder Einstellvorrichtungen ein.

In einer flexiblen Erfindungsform ist am Werkzeugträger zumindest ein Werkzeug oder ein Werkzeughalter seitlich zu einer ersten Längsebene eines Trägerprofils verschiebbar und/oder schwenkbar angeordnet. Durch diese Anordnung ist eine Anpassung der Werkzeuge an verschiedene Reihenkulturen oder eine werkzeugspezifische Anstellung und Positionierung mehrerer Werkzeuge zueinander möglich. Die Verschiebung kann manuell oder mit einem motorischen Antrieb in Schritten oder bevorzugt stufenlos erfolgen. Im Falle eines motorischen Antriebes kann dieser bequem fernbetätigt oder in Verbindung mit einer Steuerung oder einer Regelung automatisiert eingestellt werden. Bevorzugt erfolgt eine Regelung anhand sensorisch, optisch oder taktil erfassten Boden- und/oder Pflanzeneigenschaften, welche eine oder mehrere Regelgrößen für eine analoge oder computergesteuerte Regelung vorgeben. Es können sowohl Nutzpflanzen als auch unerwünschte Pflanzen wie Unkraut als solche mit ihrer Position zu den Werkzeugen und/oder in ihren Eigenschaften erfasst werden.

In einer verbesserten Ausführungsform des Werkzeugträgers ist zumindest ein Werkzeug oder ein Werkzeughalter in Richtung einer ersten Längsebene eines Trägerprofils oder mit einem senkrecht zu einer zweiten Längsebene des Trägerprofils wirkenden oder gelagerten Arretiermittel festsetzbar ausgebildet. Diese Arretiermittel ermöglichen eine diskrete oder stufenlose, bevorzugt bereichsweise Arretierung der Werkzeuge oder der Werkzeughalter in ihrer Position zu dem Werkzeugträger, der Werkzeughalter oder der Werkzeuge zueinander. Die Arretiermittel können form- oder kraftschlüssig oder mit einer externen Fremdkraft beaufschlagt wirkend ausgebildet sein.

Die Werkzeugträger können bevorzugt Werkzeuge aufweisen, welche als feststehende, schwenkende oder rotierende Schneiden oder Spitzen, insbesondere als Zinken, Messer, Scheiben oder Sterne ausgebildet sind. Diese können flexibel miteinander kombiniert oder zueinander angeordnet werden, um ein bestmögliches Arbeitsergebnis zur Lockerung und Belüftung einer Bodenoberfläche, zur Entfernung unerwünschter Pflanzen, zum Schutz von Nutzpflanzen oder zur Ausbringung von flüssigen oder festen Stoffen wie Saatgut, Dünger oder Pflanzenschutzmitteln zu erreichen.

Insbesondere kann die Erfindung in einem landwirtschaftlichen Arbeitsgerät mit Werkzeugträgern verwendet werden, indem mehrere Werkzeugträger in einem Abstand versetzt, insbesondere nebeneinander versetzt an einem Geräterahmen des landwirtschaftlichen Arbeitsgerätes angeordnet sind. Insbesondere zur Anlage und/oder Pflege von Nutzpflanzen in Reihenkulturen können mehrere Werkzeugträger zu einem Arbeitsgerät mit einer großen Arbeitsbreite kombiniert werden. Das landwirtschaftliche Arbeitsgerät wird dabei von einer Zugmaschine über eine Bodenoberfläche eines Ackers bewegt oder weist einen eigenen Antrieb, insbesondere mit einer automatisierten oder autonomen Vortriebs- und Lenkeinrichtung auf.

In einer bevorzugten Anordnung der Werkzeugträger an einem landwirtschaftlichen Arbeitsgerät sind die Werkzeugträger höhenbeweglich, insbesondere einzeln höhenbeweglich an einem Geräterahmen des landwirtschaftliches Arbeitsgerätes angeordnet. Dies erfolgt bevorzugt mittels einer Mehrfachlenker- oder Parallelogramm-Führung, welche zumindest eine höhenbewegliche Anpassung an wechselnde Bodenkonturen der Ackeroberfläche ermöglichen. Zugleich können einzelne Werkzeugträger durch Arretierung der Mehrfachlenker- oder Parallelogramm-Führung in einer oberen, ausgehobenen Stellung arretiert oder bevorzugt mittels eines motorischen oder fremdenergie-beaufschlagten Aktors einzeln ausgehoben oder abgesenkt werden, damit die Werkzeuge an den Werkzeugträgern die Fahrtrichtung kreuzende oder überlappende Reihen von Nutzpflanzen nicht zerstören. Zugleich kann mittels Mehrfachlenker- oder Parallelogramm-Führung und daran angeordnetem Energiespeicher durch den Werkzeugträger ein Auflage- oder Anpressdruck der Werkzeuge auf die Bodenoberfläche ausgeübt werden, um beispielsweise die Aggressivität oder das Eindringen der Werkzeuge in die Bodenoberfläche zu beeinflussen. Der Energiespeicher kann als mechanische Druck-, Zug-, Torsions- oder Biegefeder bevorzugt einstellbar oder weiter bevorzugt als pneumatische oder hydraulische Feder, beispielsweise ein mit einem Druckreservoir verbundener Fluidzylinder, ausgebildet sein. Dieser kann zugleich den motorischen oder fremdenergie-beaufschlagten Aktor bilden. Weiter bevorzugt erfolgt in Verbindung mit einer Steuerung und/oder einer Regelung eine ortspezifische oder sensorisch erfasste Auflagedruckregelung oder ein Aushub des Werkzeugträgers und seiner Werkzeuge. Hierzu sind ortsspezifische Informationen in der Einrichtung zur Steuerung und/oder einer Regelung hinterlegt oder werden an diese übermittelt.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 ein landwirtschaftliches Gerät mit mehreren Werkzeugträgern in Perspektive,
Fig.2 das landwirtschaftliche Gerät aus Figur 1 in Draufsicht,
Fig.3 einen Werkzeugträger in Arbeitsstellung in Perspektive,
Fig. 4 den Werkzeugträger aus Figur 1 in Seitenansicht ,
Fig. 5 den modularen Aufbau eines Teiles des Werkzeugträgers und Figur 6 eine Teilansicht davon sowie
Fig. 7 und Fig. 8 den Werkzeugträger in einer weiteren Perspektive.

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

### Figurenbeschreibung

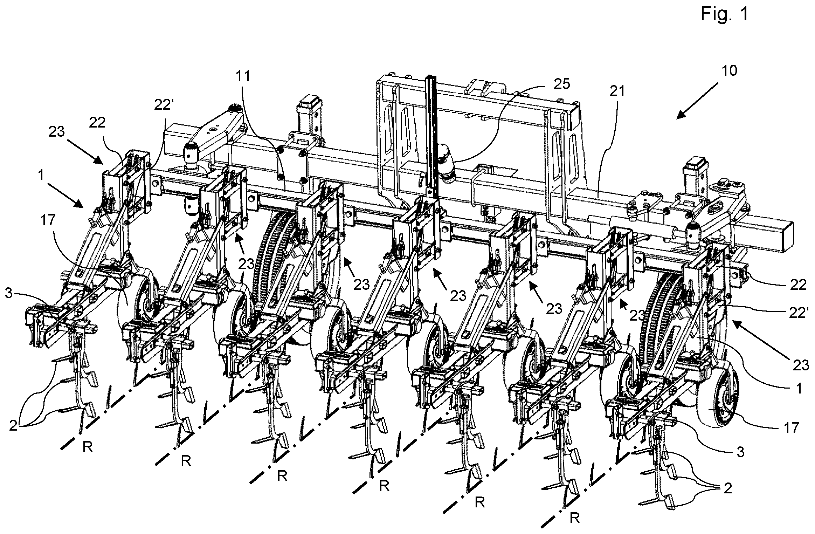

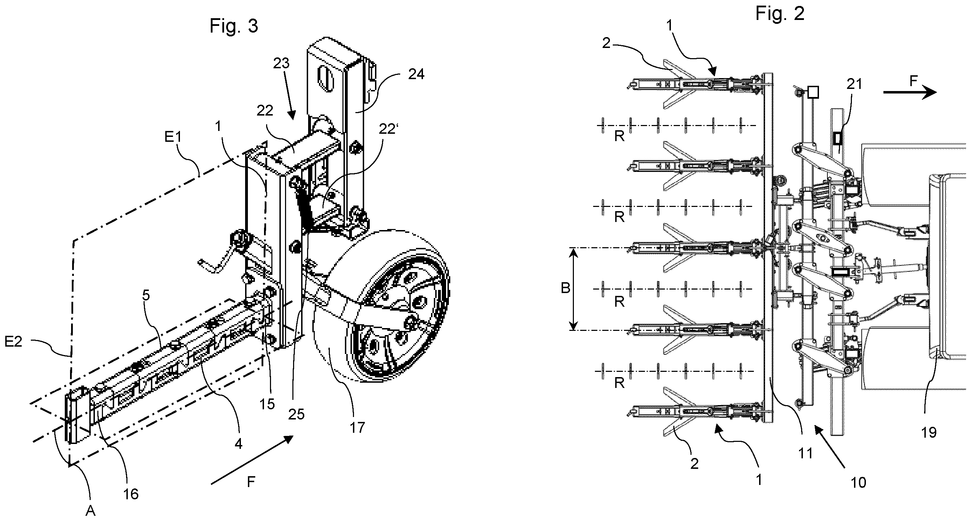

Figur 1 und 2 zeigen ein landwirtschaftliches Arbeitsgerät 10, welches über einen Anbaurahmen 21 mit einer landwirtschaftlichen Zugmaschine verbunden ist und welche das Arbeitsgerät 10 in der Fahrtrichtung F über eine Bodenoberfläche eines landwirtschaftlichen Ackers in einer Fahrtrichtung bewegt. Zugleich dient die Zugmaschine 19 als Energieversorgung für Stellaktoren, Sensoren und elektronische Steuer- und Regeleinrichtungen des landwirtschaftlichen Arbeitsgerätes 10. Die Zugmaschine 19 kann auch als autonomes Fahrzeug oder Roboter ausgebildet sein und Teile des landwirtschaftlichen Arbeitsgerätes 10 in seinen Aufbau integrieren. Auf dem landwirtschaftliches Arbeitsgerät 10 ist eine elektronische Kamera zur Pflanzen-, Pflanzenreihen und/oder Unkrauterkennung installiert. Auf dem Acker sind Nutzpflanzen in Pflanzenreihen R als Reihenkultur in einem festen Reihenabstand angebaut. An dem Anbaurahmen 21 ist bevorzugt seitenbeweglich ein Geräterahmen 11 angeordnet. Die Seitenbeweglichkeit des Geräterahmens 11 dient der Korrektur von Lenkbewegungen der Zugmaschine 19, um mit den Werkzeugen 2 keine Nutzpflanzen zu zerstören. An dem Geräterahmen 11 sind seitlich zur Fahrtrichtung einzelne Werkzeugträger 1 in einem Abstand B angeordnet. Der Abstand B entspricht der Reihenweite, also dem Abstand der Pflanzenreihen R zueinander. Bevorzugt ist die Anzahl der Werkzeugträger 1 um die Zahl eins größer oder kleiner als die Anzahl der vom Arbeitsgerät 10 überfahrenen oder überstrichenen Pflanzenreihen R.

Die Werkzeugträger 1 sind höhenbeweglich mittels einer Führung 23 am Geräterahmen 11 angeordnet. Bevorzugt ist die Führung als Viergelenk- oder Parallelogrammführung mit mehreren beweglichen Lenkern 22, 22' ausgeführt und ermöglicht eine individuelle Höhenkorrektur der Werkzeugträger 1 zur Bodenoberfläche bei Bodenunebenheiten. Hierzu sind den einzelnen Werkzeugträgern 1 Tiefenführungsmittel 17 in Form von höhenverstellbaren Stützrädern zugeordnet, welche mit der Bodenoberfläche in Kontakt stehen bzw. auf dieser abrollen. An den Werkzeugträgern 1 sind ein oder mehrere Werkzeuge 2, im vorliegenden Beispiel Hackmesser, direkt oder mittelbar über zum Werkzeugträger 1 seitlich abstehende Werkzeughalter 3 angeordnet.

Figur 3 zeigt einen einzelnen Werkzeugträger 1, welcher über die als Parallelogramm oder Viergelenk ausgebildete Führung 23 mittels der Lenker 22 und 22' höhenbeweglich mit dem Halter 24 verbunden ist. Der Halter 24 bildet die Schnittstelle zum Geräterahmen 11 und ist seitenverschieblich an diesem geklemmt oder befestigt, um verschiedene Abstände B der Werkzeugträger zueinander bei wechselnden Reihenkulturen mit unterschiedlichen Reihenweiten der Pflanzenreihen R zu begegnen.

Entlang der Fahrtrichtung F und bevorzugt nach hinten erstrecken sich mehrere Trägerprofile 4 und 5. Diese fluchten zu eine Profilachse A. Die Trägerprofile sind durch eine vertikale, erste Längsebene E1, welche zugleich eine Mittel- oder Symmetrieebene des Werkzeugträgers 1 bildet, sowie eine zweite, horizontale Längsebene E2 unterteilt. Ein erstes Trägerprofilstück 15 ist dabei als Schnittstelle fest mit dem Werkzeugträger 1 verbunden. Dahinter reihen sich entlang er Profilachse abwechselnd erste und zweite Trägerprofile 4 und 5 an. Bevorzugt bildet ein letztes Trägerprofilstück 16 den Abschluss der Reihe.

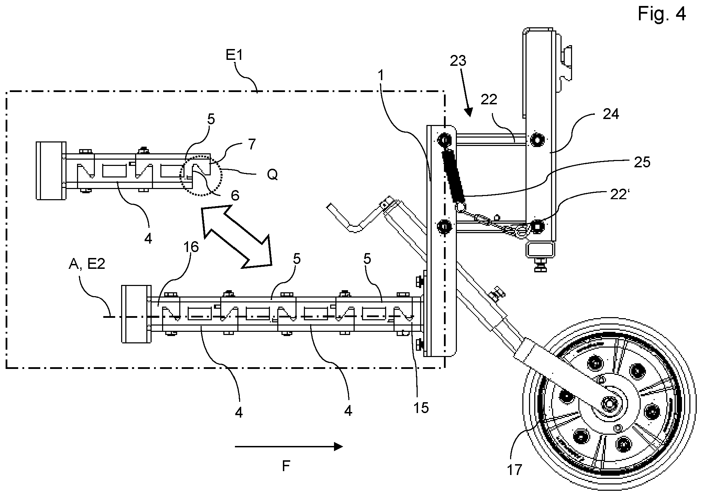

Analog zu Figur 3 zeigt Figur 4 den Werkzeugträger 1 in Seitenansicht.

Die Trägerprofile 4 und 5 sind abwechselnd von oben und unten mit endseitigen Ausnehmungen 6 und Vorsprüngen 7 ineinander verhakt. Der Formquerschnitt Q der Ausnehmungen 6 und Vorsprünge 7 bildet - auf die erste Ebene E1 projiziert, zahn- oder hakenförmige Elemente, welche zumindest einseitig eine Schräge aufweisen.

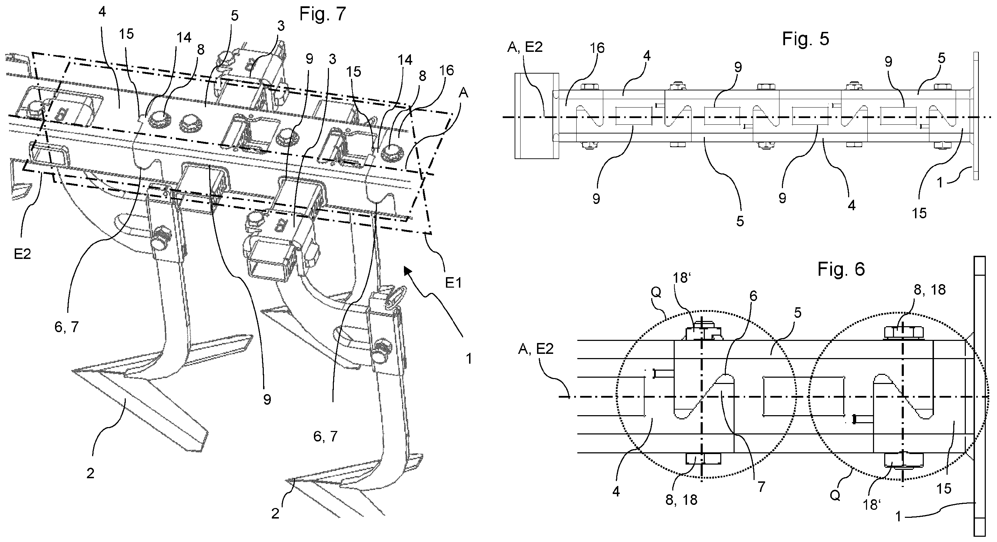

Figur 5 und 6 zeigen weitere Einzelheiten der Verbindung der Trägerprofile 4, 5, 15 und 16. An die Flanschfläche des Werkzeugträgers 1 ist ein erstes Trägerprofilstück 15 fest angeschweißt. Dahinter ist ein zweites Trägerprofil 5 eingehakt. Weitere Trägerprofile 4,5 und 16 schließen sich dahinter an.

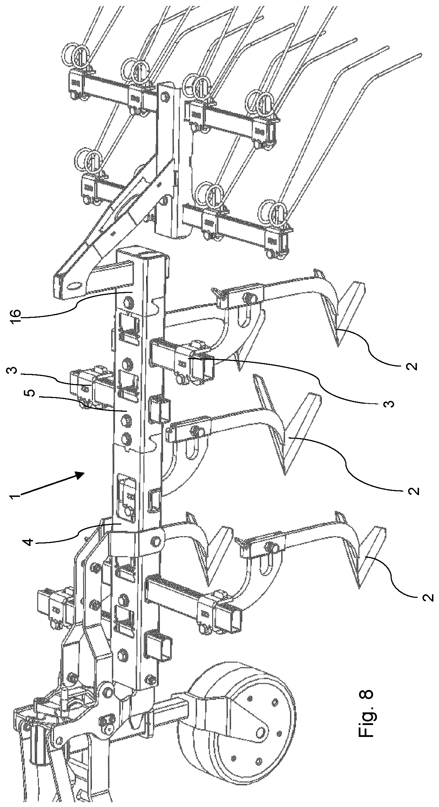

Jeweils im Bereich des Formquerschnittes Q erstreckt sich zumindest ein als Klemmmittel 18 ausgebildetes Blockiermittel 8, mit welchem die zahn- oder hakenförmigen Ausnehmungen 6 und Vorsprünge 7 zueinander senkrecht zur zweiten Ebene E2 verpresst oder geklemmt werden. Das als Schraube ausgebildete Klemmmittel 18 in Verbindung mit einer Mutter 18' erstreckt sich durch eine Ausnehmung, welche, auf die zweite Längsebene E2 projiziert, in beide, jeweils benachbarten Trägerprofile fluchtend eingebracht ist. Durch das Festspannen des Klemmmittels 18, 18' verkeilen sich die schräg geformten Ausnehmungen und Vorsprünge fest und spielfrei ineinander. Dabei reicht die spitze Kontur des Vorsprungs 7 nicht ganz in den Grund der Ausnehmung 6, so dass auch bei Verschleiß, Verschmutzung oder fertigungsbedingter Toleranzen der zueinander abgeschrägten Flankenflächen der Ausnehmungen 6 und Vorsprünge 7 ein fester Sitz der Verbindung stetes gewährleistet ist. Die Trägerprofile 4 und 5 weisen senkrecht zur ersten Längsebene E1 gesehen weitere Ausnehmungen 9 auf. Bevorzugt sind diese als Polygon oder viereckig ausgebildet und dienen zur Aufnahme seitlich in die Trägerprofile 4 und 5 eingeschobene Werkzeughalter 3, wie im folgenden zu Figur 7 und 8 beschrieben. In Figur 7 sind die zuvor beschriebenen Ausnehmungen 9 in dem Trägerprofil 5 zusehen, in welche die Werkzeughalter 3 mit den unten daran befestigten Werkzeugen 2 eingeschoben sind. Die Werkzeughalter 3 sind passend und eine Verdrehung verhindernd als Polygon- oder Viereckprofil ausgeführt und können seitlich verschoben und arretiert werden und bestimmen somit die individuelle Arbeitsbreite der Werkzeuge eines Werkzeugträgers 1 innerhalb einer Reihenweite. Im oberen Bereich der benachbarten Trägerprofile 4 und 5 sind weitere, ineinander greifende Vorsprünge 14 und Ausnehmungen 15 angeordnet, welche eine seitliche Verschiebung der Trägerprofile 4 und 5 zueinander verhindern und eine eindeutige und selbstzentrierende Montage der Trägerprofile 4 und 5 ermöglichen. Weitere, davon abweichende Ausnehmungen und Vorsprünge können geeignet sein, um bestimmte Trägerprofile zu kodieren und nur in einer bestimmten Reihenfolge oder Anordnung zu montieren. In die größeren, oberen Ausnehmungen der Trägerprofile 4, 5 können weiterhin Aktoren oder Arretiermittel zur seitlichen Einstellung oder Arretierung der Werkzeughalter, aber auch Sensoren zur Pflanzenerkennung, eingesetzt werden. Abweichend zu den bisherigen Figuren weisen die Trägerprofile 4, 5 an ihren Enden jeweils entgegengesetzt nach oben und unten ausgerichtete Ausnehmungen 6 und 7 aus. Somit können verschiedene Trägerprofile 4, 5, welche mit individuellen Werkzeugkonfigurationen ausgestattet und vormontiert sind, in beliebiger Reihenfolge bei gleicher Orientierung hintereinander montiert werden.

Analog zeigt Figur 8 die Kombination verschiedenartiger Werkzeuge 2 an einem Werkzeugträger 1, wobei den Trägerprofilen 4 und 5 als Hackmesser ausgebildete Werkzeuge 2 sowie das hintere Trägerprofilstück 16 beispielsweise einen Federzinkenstriegel trägt.

Es folgen 5 Seiten mit Zeichnungen.

**BEZUGSZEICHENLISTE**

| | |
|---|---|
| 1 | Werkzeugträger |
| 2 | Werkzeug |
| 3 | Werkzeughalter |
| 4 | Trägerprofil |
| 5 | Trägerprofil |
| 6 | Ausnehmung |
| 7 | Vorsprung |
| 8 | Blockiermittel |
| 9 | Ausbruch |
| 10 | Landwirtschaftliches Arbeitsgerät |
| 11 | Geräterahmen |
| 12 | Bodenoberfläche |
| 13 | Ausnehmung |
| 14 | Vorsprung |
| 15 | Trägerprofilstück |
| 16 | Trägerprofilstück |
| 17 | Tiefenführungsmittel |
| 18 | Klemmmitttel |
| 19 | Zugmaschine |
| 20 | Stellmotor |
| 21 | Anbaurahmen |
| 22 | Lenker |
| 23 | Führung |
| 24 | Halter |
| 25 | Kamera |
| | |
| A | Profilachse |
| B | Abstand |
| E1 | Längsebene |
| E2 | Längsebene |
| F | Fahrtrichtung |
| Q | Formquerschnitt |
| R | Pflanzenreihe |
| 30 | |

## Patentansprüche

1. Werkzeugträger (1) zur Kombination oder Anordnung mehrerer landwirtschaftlicher Werkzeuge (2), insbesondere Ausbring- oder Bodenbearbeitungswerkzeuge,
wobei der Werkzeugträger (1) zumindest ein erstes und ein zweites Trägerprofil (4, 5) zur Anordnung eines oder mehrerer Werkzeuge (2) oder dafür geeignete Werkzeughalter (3) aufweisen,
welche benachbart und entlang einer Profilachse (A) fluchtend zueinander und lösbar angeordnet sind,
wobei die Trägerprofile von einer ersten und zweiten, zueinander senkrecht angeordneten Längsebene (E1, E2) auf Höhe der Profilachse (A) durchschnitten sind,
**dadurch gekennzeichnet,**
**dass** das erste und zweite Trägerprofil (4, 5) an ihren benachbarten Enden jeweils zueinander passende Ausnehmungen (6) und/oder Vorsprünge (7) aufweisen, welche einen senkrecht zu der ersten Längsebene (E1) projizierten Formquerschnitt (Q) aufweisen,
wobei das erste und zweite Trägerprofil mit zumindest einem Blockiermittel (8) zueinander form- und/oder kraftschlüssig blockiert sind, wobei das Blockiermittel (8) senkrecht oder in einem Winkel zur zweiten Längsebene (E2) und innerhalb der oder parallel zur ersten Längsebene (E1) angeordnet ist.

2. Werkzeugträger nach Anspruch 1,
**dadurch gekennzeichnet,**
**dass** das Blockiermittel (8) als Klemmmittel (18), insbesondere mit einer Klemmkraft wirkend, senkrecht oder in einem Winkel zur zweiten Längsebene (E2) ausgebildet ist.

3. Werkzeugträger (1) nach Anspruch 1 oder 2,
**dadurch gekennzeichnet,**
**dass** die Ausnehmungen (6) und/oder Vorsprünge (7) des ersten und zweiten Trägerprofils (4, 5) formschlussförmige, insbesondere
V-förmige, keilförmige, bogenförmige, hakenförmige und/oder verzahnungsförmige Formquerschnitte (Q) aufweisen.

4. Werkzeugträger nach zumindest einem der vorstehenden Ansprüche,
**dadurch gekennzeichnet,**
**dass** das erste und zweite Trägerprofil (4, 5) an ihren benachbarten Enden mit jeweils zusätzlichen, zueinander passenden Ausnehmungen (13) und/oder Vorsprüngen (14) ausgebildet sind, welche einen senkrecht zu der zweiten Längsebene (E2) oder abweichend von der ersten Längsebene (E1) projizierten Formquerschnitt aufweisen.

5. Werkzeugträger nach zumindest einem der vorstehenden Ansprüche,
**dadurch gekennzeichnet,**
**dass** das erste und zweite Trägerprofil (4, 5) als teiloffenes oder geschlossenes Hohlprofil, insbesondere als Rund- oder Kantrohr-, Halbrund- oder U-Profil ausgebildet ist.

6. Werkzeugträger nach zumindest einem der vorstehenden Ansprüche,
**dadurch gekennzeichnet,**
**dass** ein erstes Trägerprofil (1, 15) dem Werkzeugträger fest und ein zweites Trägerprofil (5) dem ersten Trägerprofil lösbar zugeordnet ist.

7. Werkzeugträger nach zumindest einem der vorstehenden Ansprüche,
**dadurch gekennzeichnet,**
**dass** dem Werkzeugträger (1) oder zumindest einem Trägerprofil (4, 5, 15,16) ein Tiefenführungsmittel (17) zugeordnet ist.

8. Werkzeugträger nach zumindest einem der vorstehenden Ansprüche,
**dadurch gekennzeichnet,**
**dass** das zumindest eine Trägerprofil (4, 5, 16) Ausnehmungen (9) und/oder Vorsprünge zur Aufnahme von zumindest eines Werkzeuges (2) oder eines Werkzeughalters (3) aufweist.

9. Werkzeugträger nach zumindest einem der vorstehenden Ansprüche,
**dadurch gekennzeichnet,**
**dass** zumindest ein Werkzeug (2) oder ein Werkzeughalter (3) seitlich zu einer ersten Längsebene (E1) eines Trägerprofils verschiebbar und/oder schwenkbar angeordnet ist.

10. Werkzeugträger nach zumindest einem der vorstehenden Ansprüche, **dadurch gekennzeichnet,**
**dass** zumindest ein Werkzeug (2) oder ein Werkzeughalter (3) in Richtung einer ersten Längsebene (E1) eines Trägerprofils oder mit einem senkrecht zu einer zweiten Längsebene (E2) des Trägerprofils (4, 5) wirkenden oder gelagertem Arretiermittel festsetzbar ausgebildet ist.

11. Werkzeugträger nach zumindest einem der vorstehenden Ansprüche, **dadurch gekennzeichnet,**
**dass** die Werkzeuge (2) als feststehende, schwenkende oder rotierende Schneiden, oder Spitzen, insbesondere als Zinken, Messer, Scheiben oder Sterne ausgebildet sind.

12. Landwirtschaftliches Arbeitsgerät mit einem Werkzeugträger nach vorstehenden Ansprüchen,
**dadurch gekennzeichnet,**
**dass** mehrere Werkzeugträger in einem Abstand (B) versetzt, insbesondere nebeneinander versetzt an einem Geräterahmen (11) des landwirtschaftlichen Arbeitsgerätes (10) angeordnet sind.

13. Landwirtschaftliches Arbeitsgerät mit einem Werkzeugträger nach vorstehenden Ansprüchen,
**dadurch gekennzeichnet,**
**dass** die Werkzeugträger (1) höhenbeweglich, insbesondere einzeln höhenbeweglich an einem Geräterahmen (11) des landwirtschaftlichen Arbeitsgerätes (10) angeordnet sind.
